# EUROPEAN PATENT SPECIFICATION

(11) **EP 3 418 168 B1**
(45) Date of publication and mention of the grant of the patent: **26.02.2020**
(21) Application number: 18174923.5
(22) Date of filing: 29.05.2018
(51) Int. Cl.: B62J 17/02

(54) **SADDLE RIDING VEHICLE**
SATTELFAHRZEUG
VÉHICULE DE TYPE À ENFOURCHER

(30) Priority: 31.05.2017 JP 2017107860
(43) Date of publication of application: 26.12.2018
(73) Proprietor: HONDA MOTOR CO., LTD., Tokyo 107-8556 (JP)
(72) Inventor: YOKOKAWA, Shunji, Wako-shi, Saitama 351-0193 (JP); NISHIWAKI, Daisuke, Wako-shi, Saitama 351-0193 (JP); YOSHINO, Fumio, Tochigi, 321-3321 (JP)
(74) Representative: Piésold, Alexander James

(56) References cited:
- EP-A1- 2 889 207
- EP-A1- 3 348 462
- EP-A2- 2 792 586
- JP-U- S6 057 481
- US-A1- 2016 016 623

## Description

The present invention relates to a saddle riding vehicle.

Conventionally, in a saddle riding vehicle, a structure in which side covers are disposed in the vicinity of a radiator is known. Japanese Unexamined Patent Application, First Publication No. 2012-153275 discloses a structure in which controllability is improved by reducing an operating force when a vehicle body is tilted leftward and rightward taking into consideration traveling air hitting the radiator.

Meanwhile, as a structure taking into consideration a down-force in the saddle riding vehicle, a structure having a wing shape protruding outward from the vehicle body is known.

However, in the structure disclosed in Japanese Unexamined Patent Application, First Publication No. 2012-153275, the down-force is not considered.

Meanwhile, when a wing shape protruding outward from a vehicle body is additionally formed in view of a down-force, the number of parts is increased, and this is not preferable from the viewpoint of design properties.

EP 2889207 discloses a motorcycle having left and right side covers, each comprising a first side cover and a second side cover disposed outward of the first side cover. Each of the side covers comprises an inner cover and an outer cover configured to cover the inner cover from an outside in a vehicle width direction, air guide paths are formed between the inner covers and the outer covers, wings are installed in the air guide paths, and enlarged wing sections constituted by at least portions of the inner covers and the wings and extending inward in the vehicle width direction. The side covers are arranged to control turbulent air to improve rider comfort and to direct a portion of the controlled air to the engine for cooling.

Here, an aspect of the present invention is to ensure a down-force and ensure design properties while utilizing conventional parts in a saddle riding vehicle including a radiator and side covers configured to cover at least a portion of the radiator from the sides.

A saddle riding vehicle according to an aspect of the present invention adopts the following configurations.
(1) An aspect of the present invention provides: a saddle riding vehicle comprising: a radiator; and side covers configured to cover at least a portion of the radiator from sides thereof, wherein: each of the side covers comprises an inner cover and an outer cover configured to cover the inner cover from an outside in a vehicle width direction, air guide paths are formed between the inner covers and the outer covers, wings are installed in the air guide paths, enlarged wing sections constituted by at least portions of the inner covers and the wings and extending toward a front section of the radiator and inward in the vehicle width direction are provided, and the enlarged wing sections extend inward in the vehicle width direction from an outer end of a front surface of a core section of the radiator in the vehicle width direction such that front ends of the enlarged wing sections are disposed in front of outer end portions of the core section of the radiator.
(2) In the aspect of (1), the inner cover of each of the enlarged wing sections may include a curved section curved such that traveling air from a front side is able to be introduced into an end portion of the radiator.
(3) In the aspect of (1) or (2), at least portions of the wings may overlap front forks when seen from a side view.
(4) In the aspect of any one of (1) to (3), each of the wings may have an upwardly inclined form which is positioned higher as it goes rearward when seen from the side view.
(5) In the aspect of any one of (1) to (4), the wings may be integrally formed with the inner covers.
(6) In the aspect of any one of (1) to (5), each of the wings may include a plurality of inclined vanes which are positioned higher as they go rearward when seen from the side view.
(7) In the aspect of any one of (1) to (6), the outer cover may comprise a trapezoidal upper section having a trapezoidal shape extending forward and rearward when seen from a side view, and a trapezoidal lower section extending upward and downward and having a width in a forward/rearward direction that narrows as it extends downwardly when seen from the side view, and the outer cover is installed in a projected area of a front surface of a vehicle body when seen from a front view.
(8) In the aspect of any one of (1) to (7), a lower end of the outer cover may be disposed at the same height as that of an occupant step when seen from the side view.

According to the aspect of (1), since the enlarged wing sections constituted by at least portions of the inner covers and the wings and extending toward the front section of the radiator and inward in the vehicle width direction are provided, a down-force can be ensured while utilizing the side covers that are conventional parts. In addition, since the wings are installed in the air guide paths between the inner covers and the outer covers, design properties are also not degraded. Accordingly, a down-force can be ensured while utilizing conventional parts, and design properties can be ensured.

According to the aspect of (2), as the inner covers in the enlarged wing section include curved sections curved such that traveling air from a front side can be introduced into the end portion of the radiator, since the traveling air from the front side can be introduced into the end portion of the radiator even when the inner covers are disposed in front of the radiator, traveling air hitting the radiator can be ensured.

According to the aspect of (3), when seen from the side view, since at least portions of the wings overlap the front forks, a flow of the traveling air around the front forks can be rectified.

According to the aspect of (4), when seen from the side view, since the wings have upwardly inclined forms which are positioned higher as they go rearward, a down-force can be ensured.

According to the aspect of (5), since the wings are integrally formed with the inner covers, productivity can be improved in comparison with the case in which the wings are separate from the inner covers.

According to the aspect of (6), since each of the wings includes a plurality of inclined vanes which are positioned higher as they go rearward when seen from the side view, a larger down-force can be ensured in comparison with a case in which the wing includes only one vane.

According to the aspect of (7), since the outer cover has a triangular shape protruding downward when seen from the side view and the outer cover is installed in the projected area of the front surface of the vehicle body when seen from the front view, design properties can be ensured while reducing the size of the outer cover when the entire vehicle body is seen.

According to the aspect of (8), since the lower end of the outer cover is disposed at the same height as that of the occupant step when seen from the side view, the following effect can be exhibited. In a state in which an occupant rides in the vehicle, since the occupant is in a posture concealed over a height above the occupant step, the influence of a flow of the traveling air after passing through the air guide paths of the side covers can be minimized.

Certain embodiments of the invention will now be described, by way of example only, and with reference to the accompanying drawings.
FIG. 1 is a left side view of a motorcycle according to an embodiment of the present invention.
FIG. 2 is a front view of the motorcycle according to the embodiment of the present invention.
FIG. 3 is a left side view of a side cover according to the embodiment of the present invention.
FIG. 4 is a front view of the side cover according to the embodiment of the present invention.
FIG. 5 is a view including a cross section taken along line V-V of FIG. 3.
FIG. 6 is a view showing a cross-sectional flow velocity distribution of a motorcycle according to a comparative example.
FIG. 7 is a view showing a cross-sectional flow velocity distribution of the motorcycle according to the embodiment of the present invention, corresponding to a cross section taken along line VII-VII of FIG. 1.
FIG. 8 is a front view of a motorcycle according to a variant of the embodiment of the present invention.

Hereinafter, embodiments of the present invention will be described with reference to the accompanying drawings. Further, directions of forward, rearward, leftward, rightward, and the like described below are the same as directions in a vehicle described below unless the context clearly indicates otherwise. In addition, in appropriate places in the drawings used in the following description, an arrow FR showing a forward direction with respect to a vehicle, an arrow LH showing a leftward direction with respect to a vehicle and an arrow UP showing an upward direction with respect to a vehicle are provided.

### <Entire vehicle>

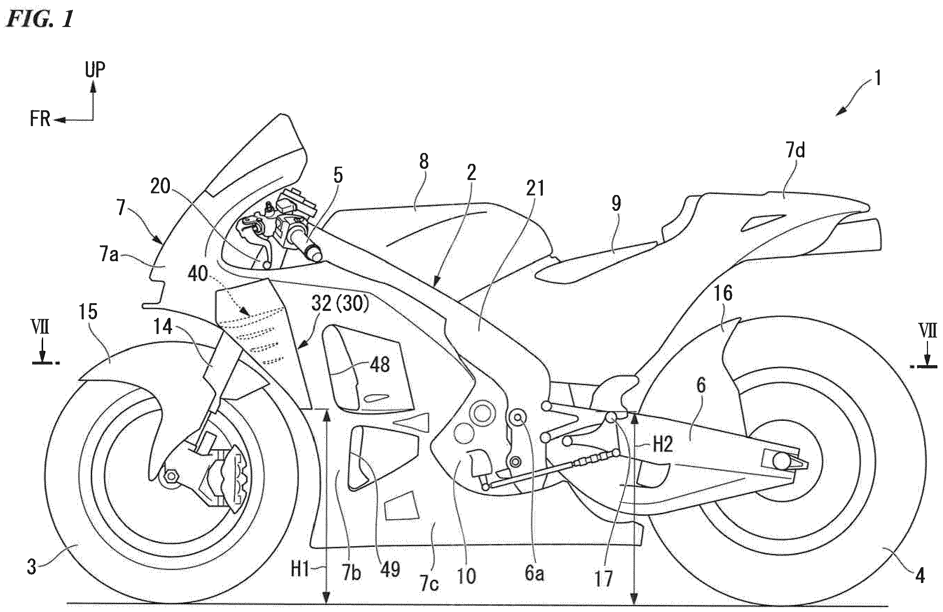

FIG. 1 shows a motorcycle 1 serving as an example of a saddle riding vehicle. Referring to FIG. 1, the motorcycle 1 includes a front wheel 3 steered by a handle 5, and a rear wheel 4 driven by a power unit 10 including an engine. Hereinafter, the motorcycle may be simply referred to as "a vehicle."

Steering system parts including the handle 5 and the front wheel 3 are steerably pivoted by a head pipe 20 formed on a front end portion of a vehicle body frame 2. A handle steering shaft (not shown) connected to the handle 5 is inserted through the head pipe 20. The power unit 10 is disposed on a central section of the vehicle body frame 2 in a forward/rearward direction. A swing arm 6 is vertically swingably pivoted on a rear section of the power unit 10 about a pivot shaft 6a. A rear suspension (not shown) is interposed between a front section of the swing arm 6 and a rear section of the vehicle body frame 2.

For example, the vehicle body frame 2 may be formed by integrally coupling steel members of a plurality of kinds through welding or the like. The vehicle body frame 2 includes a pair of left and right main frames 21 extending rearward and downward from the head pipe 20 and then extending by curving downward, a cross member (not shown) extending in the vehicle width direction and connecting the left and right main frames 21, and seat rails (not shown) extending rearward and upward from rear upper end portions of the left and right main frames 21.

A fuel tank 8 is disposed above the left and right main frames 21. A seat 9 is disposed behind the fuel tank 8 and above the seat rails (not shown).

The vehicle body frame 2 is covered by a vehicle body cover 7. The vehicle body cover 7 includes a front cowl 7a configured to cover a front section of the vehicle body frame 2, front side cowls 7b configured to cover a side portion of the front section of the vehicle body frame 2, an under cowl 7c configured to cover a lower section of the vehicle body frame 2, and a rear cowl 7d configured to cover a rear section of the vehicle body frame 2. In FIG. 1, reference numeral 14 designates a front fork, reference numeral 15 designates a front fender, reference numeral 16 designates a rear fender, and reference numeral 17 designates a main step (an occupant step).

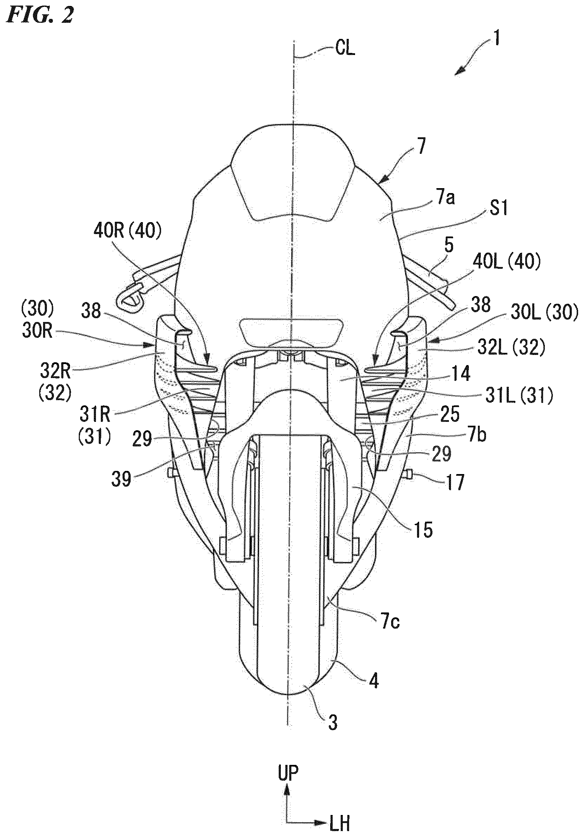

As shown in FIG. 2, the motorcycle 1 includes a radiator 25 configured to cool cooling water that circulates through the inside of the engine, and a pair of left and right side covers 30 configured to cover the radiator 25 from the sides.

Hereinafter, in components of the vehicle, "L" is added to components disposed on a left side, and "R" is added to components disposed on a right side. In FIG. 2, reference numeral CL designates a lateral centerline of the vehicle body.

### <Radiator>

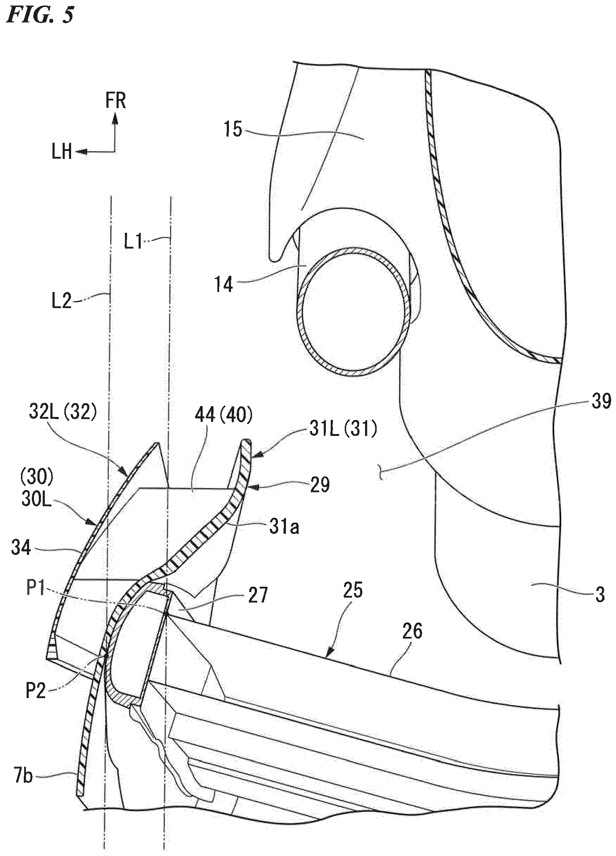

The radiator 25 is disposed behind the front wheel 3 and in front of the engine. The radiator 25 is supported by the vehicle body frame 2 (see FIG. 1) via a stay (not shown). For example, the radiator 25 is a finned tube type radiator having gaps through which traveling air passes forward and rearward. As shown in FIG. 5, the radiator 25 includes a core section 26 configured to exchange heat between cooling water and traveling air, and a pair of left and right tank sections 27 installed on left and right side portions of the core section 26. For the sake of convenience, in FIG. 5, a structure surrounding a left side portion of the radiator 25 is shown.

When seen from the front view (In front view) of FIG. 2, the radiator 25 has a rectangular shape elongated in a lateral direction. When seen from a cross-sectional view (In a cross-sectional view) of FIG. 5, the radiator 25 has a U-shape opening forward. The radiator 25 is inclined to be disposed rearward as it goes downward. The radiator 25 has a symmetrical shape in a leftward/rightward direction. When seen from the front view of FIG. 2, a center of the radiator 25 in the vehicle width direction overlaps the lateral centerline CL of the vehicle body.

### <Side covers>

As shown in FIG. 2, the left and right side covers 30L and 30R include a pair of left and right inner covers 31L and 31R disposed inside in the vehicle width direction, and a pair of left and right outer covers 32L and 32R configured to cover the left and right inner covers 31L and 31R from the outside in the vehicle width direction. The left and right side covers 30L and 30R (the left and right inner covers 31L and 31R and the left and right outer covers 32L and 32R) have a symmetrical shape in the leftward/rightward direction. Air guide paths 38 through which traveling air passes forward and rearward are formed between the inner covers 31 and the outer covers 32.

### <Inner cover>

The inner covers 31 constitute front sections of the front side cowls 7b. The inner covers 31 are portions of the front side cowls 7b disposed close to front forks 14. The inner covers 31 are connected to a front lower end of the front cowl 7a.

The inner covers 31 form an opening section 39 configured to expose the radiator 25 or the like from a front side together with a front lower end of the front cowl 7a and an outer circumferential edge of a front fender 15. The opening section 39 functions as an intake port for air traveling toward the radiator 25 or the like. Traveling air introduced from the opening section 39 passes through the radiator 25 or the like and then is discharged outside via a pair of upper and lower side openings 48 and 49 (see FIG. 1) or the like.

When seen from the front view of FIG. 2, front edges of the left and right inner covers 31 are inclined to be disposed further outward in the vehicle width direction as they go downward from a front lower end of the front cowl 7a, and then, curve inward in the vehicle width direction toward an axle of the front wheel 3.

When seen from the cross-sectional view of FIG. 5, the inner covers 31 constitute enlarged wing sections 29 extending toward a front section of the radiator 25 and inward in the vehicle width direction together with portions of wings 40. When seen from the cross-sectional view of FIG. 5, the inner covers 31 in the enlarged wing sections 29 include curved sections 31a that are curved such that traveling air from the front side can be introduced into an outer end portion of the radiator 25 in the vehicle width direction. For the sake of convenience, in FIG. 5, a structure of the left inner cover 31 is shown.

When seen from the cross-sectional view of FIG. 5, the fronts end of the curved sections 31a are disposed in front of the outer end portion of the radiator 25 in the vehicle width direction of the core section 26. When seen from the cross-sectional view of FIG. 5, the curved section 31a is curved to be disposed further outward in the vehicle width direction as it goes rearward from the front end, and then, inclined toward an outer end of the radiator 25 in the vehicle width direction of the tank section 27.

In FIG. 5, reference numeral P1 designates an outer end of the radiator 25 in the vehicle width direction of a front surface of the core section 26 (hereinafter, referred to as "an outer end of a front surface of the core section"), reference numeral P2 designates an outer end of the radiator 25 in the vehicle width direction of the tank section 27 (hereinafter, referred to as "an outer end of the tank section"), reference numeral L1 designates a virtual straight line parallel to the lateral centerline CL (see FIG. 2) of the vehicle body and passing through the outer end P1 of the front surface of the core section (hereinafter, referred to as "a virtual straight line of a core end"), and reference numeral L2 designates a virtual straight line parallel to the lateral centerline CL of the vehicle body and passing through the outer end P2 of the tank section (hereinafter, referred to as "a virtual straight line of a tank end").

When seen from the cross-sectional view of FIG. 5, each of the enlarged wing sections 29 is disposed in front of the outer end P1 of the front surface of the core section. When seen from the cross-sectional view of FIG. 5, the enlarged wing section 29 is disposed in front of the outer end P2 of the tank section. When seen from the cross-sectional view of FIG. 5, the enlarged wing section 29 extends inward in the vehicle width direction from the virtual straight line L1 of the core end. When seen from the cross-sectional view of FIG. 5, the enlarged wing section 29 extends inward in the vehicle width direction from the virtual straight line L2 of the tank end.

### <Outer cover>

As shown in FIG. 2, the outer covers 32 form the air guide paths 38, in which the wings 40 are formed, together with the inner covers 31. The air guide paths 38 are open at front and rear sides. The air guide paths 38 constitute flow paths for air flowing along the wings 40. That is, the air guide paths 38 function as intake ports for traveling air toward the wings 40 and discharge ports for the traveling air flowing along the wings 40.

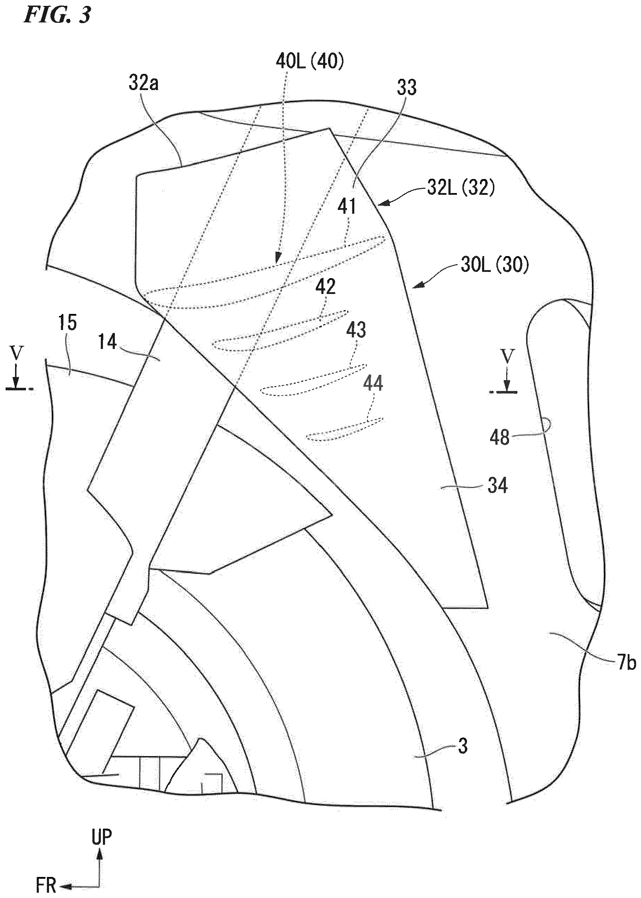

When seen from the side view (In the side view) of FIG. 3, the outer cover 32 is disposed behind and above the front wheel 3. When seen from the side view of FIG. 3, the front edge of the outer cover 32 is inclined to be disposed downward as it goes rearward along the front edge of the front side cowl 7b.

When seen from the side view of FIG. 3, each of the outer covers 32 has a triangular shape protruding downward. Specifically, when seen from the side view of FIG. 3, the outer cover 32 has a combination form of a trapezoidal upper section 33 having a trapezoidal shape extending forward and rearward and a trapezoidal lower section 34 having a width in a forward/rearward direction that narrow as it goes downward while extending upward and downward.

When seen from the front view of FIG. 2, the outer covers 32 are formed in a projected area S1 of a front surface of the vehicle body. The projected area S1 of the front surface of the vehicle body means an area to which the front surface of the vehicle body is projected. In other words, the projected area S1 of the front surface of the vehicle body is an area of a region surrounded by outer circumferential edges of the vehicle body cover 7 and the side covers 30 when seen from the front view.

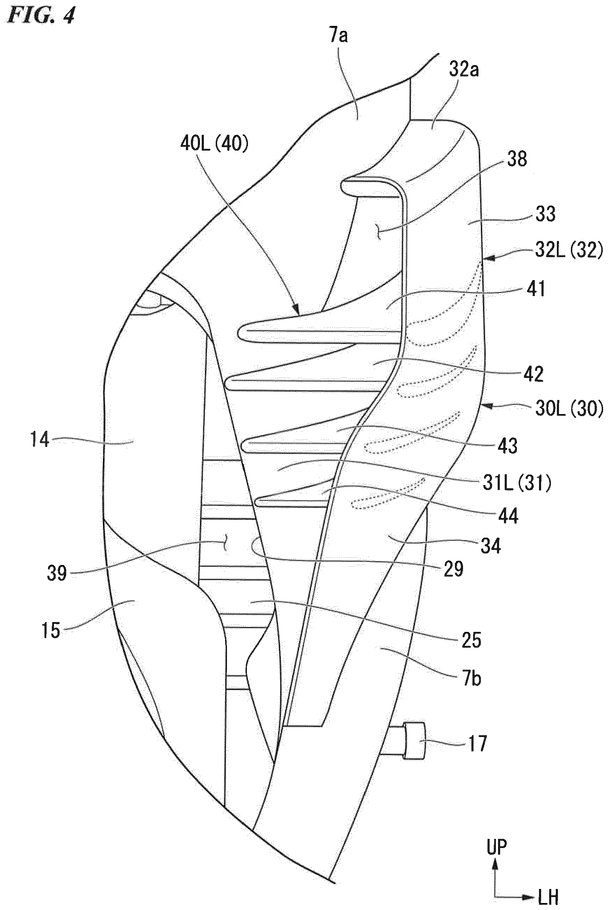

When seen from the front view of FIG. 4, the front edge of the outer cover 32 protrudes outward from the outer end of the front cowl 7a in the vehicle width direction, extends by curving downward, curves such that it is disposed further inward in the vehicle width direction as it goes downward, and then, is inclined toward the outer end of the front edge of the inner cover 31 in the vehicle width direction. In the embodiment, the outer cover 32 includes a portion protruding outward from the outer end of the front cowl 7a in the vehicle width direction (hereinafter, referred to as "an outward protrusion 32a"). When seen from the side view of FIG. 3, the outward protrusion 32a is inclined so as to be positioned higher as it goes rearward. For the sake of convenience, in FIG. 3 and FIG. 4, the outward protrusion 32a in the left outer cover 32L is shown.

When seen from the side view of FIG. 1, a lower end of the outer cover 32 is disposed at the same height as that of a main step 17. In other words, a height H1 of the lower end of the outer cover 32 is substantially equal to a height H2 of the main step 17 (H1 ≒ H2). Here, the height H1 of the lower end of the outer cover 32 is a distance between the lower end of the outer cover 32 and a road surface. The height H2 of the main step 17 is a distance between a footrest (an upper end) of the main step 17 and a road surface.

### <Wings>

As shown in FIG. 2, the wings 40 are installed in the air guide paths 38. When seen from the front view of FIG. 2, the pair of left and right wings 40 are formed to protrude outward from the left and right inner covers 31L and 31R toward the left and right outer covers 32L and 32R in the vehicle width direction. The left and right wings 40L and 40R are integrally formed with the left and right inner covers 31L and 31R, respectively. When seen from the side view of FIG. 3, the wing 40 has an upwardly inclined form which is positioned higher as it goes rearward. When seen from the side view of FIG. 3, a portion of each of the wings 40 overlaps each of the front forks 14.

When seen from the side view of FIG. 3, the wing 40 includes a plurality of inclined vanes 41, 42, 43 and 44 which is positioned higher as they go rearward. In the embodiment, the wing 40 includes four vanes 41, 42, 43 and 44. The four vanes 41, 42, 43 and 44 are disposed below the outward protrusion 32a and within a width of the side cover 30 in the forward/rearward direction.

The four vanes 41, 42, 43 and 44 are arranged in the order of the first vane 41, the second vane 42, the third vane 43 and the fourth vane 44 from above. The four vanes 41, 42, 43 and 44 have widths in the forward/rearward direction that decrease in the order of the first vane 41, the second vane 42, the third vane 43 and the fourth vane 44.

When seen from the side view of FIG. 3, the first vane 41 and the second vane 42 overlap the front forks 14.

### <Cross-sectional flow velocity distribution>

Here, actions of the wings 40 according to the embodiment will be described together with a comparative example.

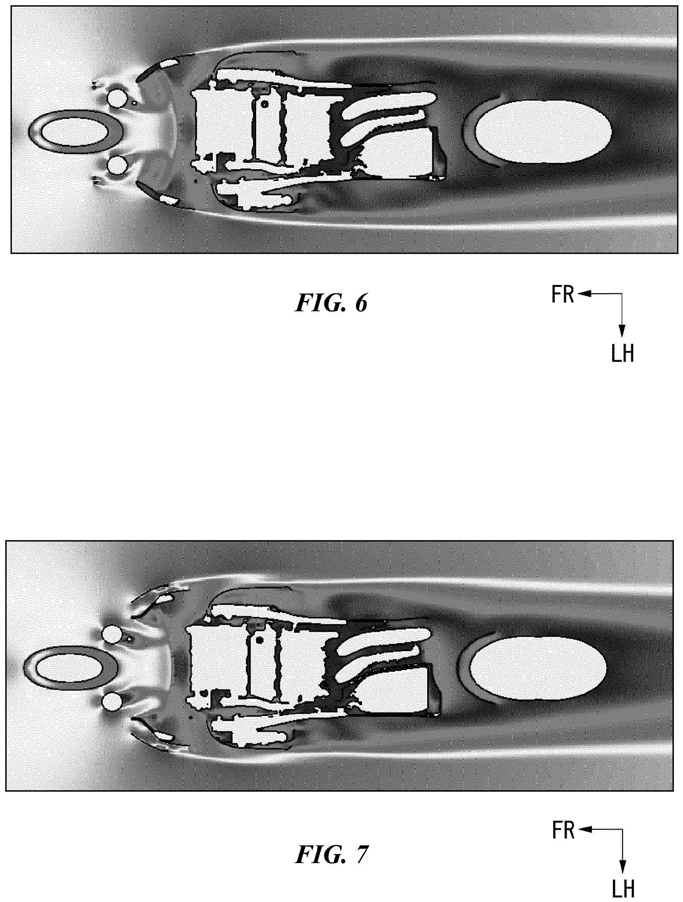

FIG. 6 is a view showing a cross-sectional flow velocity distribution of a motorcycle according to the comparative example. FIG. 7 is a view showing a cross-sectional flow velocity distribution of the motorcycle according to the embodiment. FIG. 6 and FIG. 7 are views corresponding to a cross section taken along line VII-VII in FIG. 1.

The motorcycle according to the comparative example does not include the wings 40 (see FIG. 2) according to the embodiment. As shown in FIG. 6, in the comparative example, a flow of traveling air extends to be disposed further outward in the vehicle width direction as it goes rearward.

On the other hand, the motorcycle according to the embodiment includes the wings 40 (see FIG. 2) in the air guide paths 38. As shown in FIG. 7, in the embodiment, in comparison with the comparative example (see FIG. 6), extending of the flow of the traveling air further outward in the vehicle width direction is prevented. Accordingly, a flow of traveling air can be smooth, and an increase in tractive resistance can be prevented.

As described above, in the embodiment, in the motorcycle 1 including the radiator 25 and the side covers 30 configured to cover the radiator 25 from the sides, the side covers 30 include the inner covers 31 and the outer covers 32 configured to cover the inner covers 31 from the outside in the vehicle width direction, the air guide paths 38 are formed between the inner covers 31 and the outer covers 32, the wings 40 are formed in the air guide paths 38, and the enlarged wing sections 29 constituted by portions of the inner covers 31 and the wings 40 and extending toward the front section of the radiator 25 and inward in the vehicle width direction are provided.

According to the configuration, as the enlarged wing sections 29 constituted by the portions of the inner covers 31 and the wings 40 and extending toward the front section of the radiator 25 and inward in the vehicle width direction are provided, a down-force can be ensured while utilizing the side covers 30 that are conventional parts. In addition, since the wings 40 are installed in the air guide paths 38 between the inner covers 31 and the outer covers 32, design properties is not degraded. Accordingly, it is possible to ensure a down-force while utilizing conventional parts, and to ensure design properties.

In addition, in the embodiment, as the inner covers 31 in the enlarged wing sections 29 include the curved sections 31a that are curved such that traveling air from the front side can be introduced into the end portion of the radiator 25, since the traveling air from the front side can be introduced into the end portion of the radiator 25 even when the inner covers 31 are disposed in front of the radiator 25, traveling air hitting the radiator 25 can be ensured.

In addition, in the embodiment, when seen from the side view, as the portions of the wings 40 overlap the front forks 14, the flow of the traveling air around the front forks 14 can be rectified.

In addition, in the embodiment, when seen from the side view, as each of the wings 40 has an upwardly inclined form which is positioned higher as it goes rearward, a down-force can be ensured.

In addition, in the embodiment, since the wings 40 are integrally formed with the inner covers 31, productivity can be improved in comparison with the case in which the wings 40 are separate from the inner covers 31.

In addition, in the embodiment, since each of the wings 40 includes the plurality of inclined vanes 41, 42, 43 and 44 which are positioned higher as they go rearward when seen from the side view, a larger down-force can be ensured in comparison with the case in which each of the wings 40 includes only one vane.

In addition, in the embodiment, since the outer cover 32 has a triangular shape protruding downward when seen from the side view and the outer cover 32 is installed in the projected area S1 of the front surface of the vehicle body when seen from the front view, design properties can be ensured while reducing a size of the outer cover 32 when the entire vehicle body is seen.

In addition, in the embodiment, when seen from the side view, since the lower end of the outer cover 32 is disposed at the same height as that of the main step 17, the following effects are exhibited. In a state in which an occupant rides in the vehicle, since the occupant is in a posture concealed over a height above the main step 17, an influence of the flow of the traveling air after passing through the air guide paths 38 of the side covers 30 can be minimized.

In addition, in the embodiment, when seen from the side view, since the outward protrusion 32a of the outer cover 32 is inclined so as to be positioned higher as it goes rearward, a larger down-force can be ensured in combination with the down-force of the wings 40.

### < Modified example >

Further, while the example in which the side covers 30 cover the entire radiator 25 from the sides has been exemplarily described in the embodiment, there is no limitation thereto. For example, the side covers 30 may cover a portion of the radiator 25 from sides. That is, the side covers 30 may cover at least a portion of the radiator 25 from sides thereof.

In addition, while the example in which the enlarged wing sections 29 are constituted by portions of the inner covers 31 and the wings 40 has been exemplarily described in the embodiment, there is no limitation thereto. For example, the enlarged wing sections 29 may be constituted by all of the inner covers 31 and the wings 40. That is, the enlarged wing sections 29 may be constituted by at least portions of the inner covers 31 and the wings 40.

In addition, while the example in which portions of the wings 40 overlap the front forks 14 when seen from the side view has been exemplarily described in the embodiment, there is no limitation thereto. For example, the entire wings 40 may overlap the front forks 14 when seen from the side view. That is, at least portions of the wings 40 may overlap the front forks 14 when seen from the side view.

In addition, while the example in which the wings 40 are formed in an upwardly inclined form which is positioned higher as they go rearward when seen from the side view has been exemplarily described in the embodiment, there is no limitation thereto. For example, the wings 40 may be configured to enable angle adjustment. That is, a posture of the wings 40 may also be adjustable between a state in which the wings are inclined so as to be positioned higher as they go rearward and a horizontal state when seen from the side view. Accordingly, an effect of a down-force can be adjusted according to requirements.

In addition, while the example in which the wings 40 are integrally formed with the inner covers 31 has been exemplarily described in the embodiment, there is no limitation thereto. For example, the wings 40 may be separate from the inner covers 31.

In addition, while the example in which each of the wings 40 includes the four vanes 41, 42, 43 and 44 has been exemplarily described in the embodiment, there is no limitation thereto. For example, each of the wings 40 may be constituted by only one vane. In addition, each of the wings 40 may include a plurality of vanes, for example, two, three, or five or more.

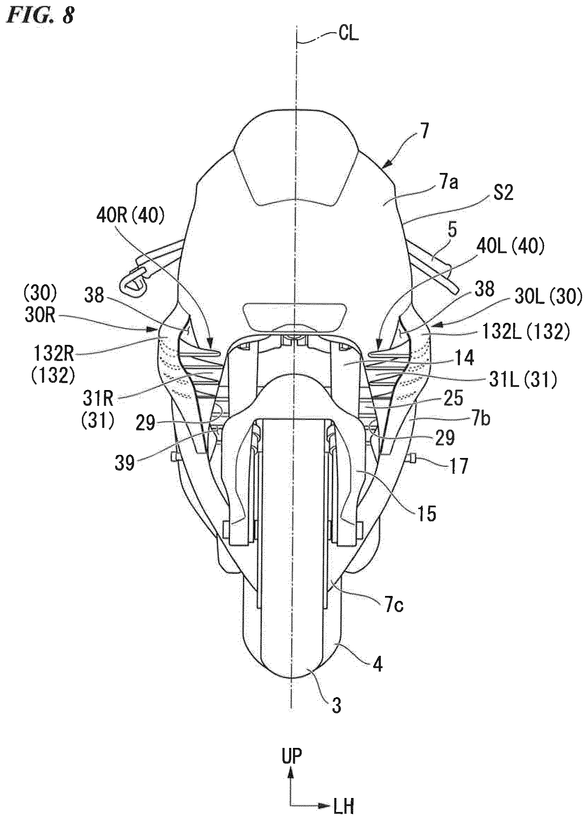

In addition, while the example in which each of the outer covers 32 includes the outward protrusion 32a has been exemplarily described in the embodiment, there is no limitation thereto. For example, each of the outer covers 32 may not include the outward protrusion 32a. For example, as shown in FIG. 8, front edges of left and right outer covers 132L and 132R may be curved to be disposed further outward in the vehicle width direction as they go downward and connected to the outer end of the front cowl 7a in the vehicle width direction, curved to be disposed further inward in the vehicle width direction as they go downward, and then, inclined toward the outer ends of the front edges of the left and right inner covers 31 L and 31R in the vehicle width direction. When seen from the front view of FIG. 8, the outer covers 132 may be installed in a projected area S2 of a front surface of the vehicle body.

Further, the present invention is not limited to the embodiment, and for example, all vehicles on which a driver crosses and rides on the vehicle body are included as the saddle riding vehicle, and in addition to a motorcycle (including a motorized bicycle and a scooter type vehicle), a three-wheeled vehicle (also including a two-front-wheeled and one-rear-wheeled vehicle in addition to a one-front-wheeled and two-rear-wheeled vehicle) may also be included. In addition, the present invention may also be applied to a four-wheeled vehicle such as an automobile or the like in addition to a motorcycle.

Moreover, the configuration in the above embodiment is an example of the present invention, and various modifications are possible without departing from the scope of the present invention defined by the claims, such as replacing the constituent elements of the embodiment with well-known constituent elements.

## Claims

1. A saddle riding vehicle (1) comprising:
a radiator (25); and
side covers (30L,30R) configured to cover at least a portion of the radiator from sides thereof, wherein:
each of the side covers comprises an inner cover (31L,31R) and an outer cover (32L,32R) configured to cover the inner cover from an outside in a vehicle width direction,
air guide paths (38) are formed between the inner covers and the outer covers,
wings (40L,40R) are installed in the air guide paths,
enlarged wing sections (29) constituted by at least portions of the inner covers and the wings and extending toward a front section of the radiator and inward in the vehicle width direction are provided, and
the enlarged wing sections extend inward in the vehicle width direction from an outer end (P1) of a front surface of a core section (26) of the radiator in the vehicle width direction such that front ends of the enlarged wing sections are disposed in front of outer end portions of the core section of the radiator.

2. The saddle riding vehicle (1) according to claim 1, wherein the inner cover (31L,31R) of each of the enlarged wing sections (29) comprises a curved section (31a) curved such that traveling air from a front side is able to be introduced into an end portion of the radiator (25).

3. The saddle riding vehicle (1) according to claim 1 or 2, wherein at least portions of the wings (40L,40R) overlap front forks (14) when seen from a side view.

4. The saddle riding vehicle (1) according to any one of claims 1 to 3, wherein each of the wings (40L,40R) has an upwardly inclined form which is positioned higher as it goes rearward when seen from a side view.

5. The saddle riding vehicle (1) according to any one of claims 1 to 4, wherein the wings (40L,40R) are integrally formed with the inner covers (31L,31R).

6. The saddle riding vehicle (1) according to any one of claims 1 to 5, wherein each of the wings (40L,40R) comprises a plurality of inclined vanes which are positioned higher as they go rearward when seen from a side view.

7. The saddle riding vehicle (1) according to any one of claims 1 to 6, wherein the outer cover (32L,32R) comprises a trapezoidal upper section (33) having a trapezoidal shape extending forward and rearward when seen from a side view, and a trapezoidal lower section (34) extending upward and downward and having a width in a forward and rearward direction that narrows as it extends downwardly when seen from the side view, and the outer cover is installed in a projected area of a front surface of a vehicle body when seen from a front view.

8. The saddle riding vehicle (1) according to any one of claims 1 to 7, wherein a lower end of the outer cover (32L,32R) is disposed at the same height as that of an occupant step (17) when seen from a side view.

## Patentansprüche

1. Sattelfahrzeug (1) umfassend:
einen Kühler (25); und
Seitenabdeckungen (30L,30R), die konfiguriert sind, mindestens einen Abschnitt des Kühlers von Seiten davon abzudecken, wobei:
jede der Seitenabdeckungen eine Innenabdeckung (31L,31R) und eine Außenabdeckung (32L,32R) umfasst, die konfiguriert sind, die Innenabdeckung von einer Außenseite in einer Fahrzeugbreitenrichtung abzudecken,
Luftleitwege (38) zwischen den Innenabdeckungen und den Außenabdeckungen gebildet sind,
Flügel (40L,40R) in den Luftleitwegen installiert sind,
vergrößerte Flügelbereiche (29), die von mindestens Abschnitten der Innenabdeckungen errichtet sind und sich zu einem Vorderbereich des Kühlers und nach innen in der Fahrzeugbreitenrichtung verlängern, bereitgestellt sind, und
die vergrößerten Flügelbereiche sich in der Fahrzeugbreitenrichtung von einem Außenende (P1) einer Vorderfläche eines Kernbereichs (26) des Kühlers in der Fahrzeugbreitenrichtung nach innen verlängern, sodass Vorderenden der vergrößerten Flügelbereiche vor äußeren Endabschnitten des Kernbereichs des Kühlers angeordnet sind.

2. Sattelfahrzeug (1) nach Anspruch 1, wobei die Innenabdeckung (31L,31R) von jedem der vergrößerten Flügelbereiche (29) einen gekrümmten Bereich (31a) umfasst, der so gekrümmt ist, dass ziehende Luft von einer Vorderseite im Stande ist, in einen Endabschnitt des Kühlers (25) eingeleitet zu werden.

3. Sattelfahrzeug (1) nach Anspruch 1 oder 2, wobei mindestens Abschnitte der Flügel (40L,40R) Vordergabeln (14) überlappen, wenn aus einer Seitenansicht gesehen.

4. Sattelfahrzeug (1) nach einem der Ansprüche 1 bis 3, wobei jeder der Flügel (40L,40R) eine nach oben geneigte Form aufweist, die höher positioniert ist als sie nach hinten geht, wenn aus einer Seitenansicht gesehen.

5. Sattelfahrzeug (1) nach einem der Ansprüche 1 bis 4, wobei die Flügel (40L,40R) ganzheitlich mit den Innenabdeckungen (31L,31R) gebildet sind.

6. Sattelfahrzeug (1) nach einem der Ansprüche 1 bis 5, wobei jeder der Flügel (40L,40R) eine Vielzahl geneigter Schaufeln umfasst, die höher positioniert sind als sie nach hinten gehen, wenn aus einer Seitenansicht gesehen.

7. Sattelfahrzeug (1) nach einem der Ansprüche 1 bis 6, wobei die Außenabdeckung (32L,32R) einen trapezförmigen oberen Bereich (33) umfasst, der eine Trapezform aufweist, die sich nach vorne und hinten erstreckt, wenn aus einer Seitenansicht gesehen, und einen trapezförmigen unteren Abschnitt (34), der sich nach oben und unten erstreckt und eine Breite in einer Vorwärts- und Rückwärtsrichtung aufweist, die schmäler wird, wenn er sich nach unten erstreckt, wenn aus der Seitenansicht gesehen, und
die Außenabdeckung in einem projizierten Gebiet einer Vorderfläche einer Fahrzeugkarosserie installiert ist, wenn aus einer Vorderansicht gesehen.

8. Sattelfahrzeug (1) nach einem der Ansprüche 1 bis 7, wobei ein unteres Ende der Außenabdeckung (32L,32R) an derselben Höhe wie der eines Insassentrittbretts (17) installiert ist, wenn aus einer Vorderansicht gesehen.

## Revendications

1. Véhicule du type à enfourcher (1) comprenant :
un radiateur (25) ; et
des coiffes latérales (30L, 30R) configurées pour recouvrir au moins une partie du radiateur sur ses côtés, dans lequel :
chacune des coiffes latérales comprend une coiffe interne (31L, 31R) et une coiffe externe (32L, 32R) configurée pour recouvrir la coiffe interne de l'extérieur dans le sens de la largeur du véhicule,
des trajets de guidage d'air (38) sont formés entre les coiffes internes et les coiffes externes,
des ailes (40L, 40R) sont installées dans les trajets de guidage d'air,
des sections d'ailes agrandies (29) constituées par au moins des parties des coiffes internes et les ailes et s'étendant vers une section avant du radiateur et vers l'intérieur dans le sens de la largeur du véhicule sont prévues et
les sections d'ailes agrandies s'étendent vers l'intérieur dans le sens de la largeur du véhicule depuis une extrémité externe (P1) d'une surface avant d'une section centrale (26) du radiateur dans le sens de la largeur du véhicule en sorte que les extrémités avant des sections d'ailes agrandies soient disposées en regard des parties d'extrémité externes de la section centrale du radiateur.

2. Véhicule à enfourcher (1) selon la revendication 1, dans lequel la coiffe interne (31L, 31R) de chacune des sections d'ailes agrandies (29) comprend une section (31a) incurvée en sorte que l'air en déplacement depuis un côté avant soit à même de s'introduire dans une partie d'extrémité du radiateur (25).

3. Véhicule à enfourcher (1) selon la revendication 1 ou 2, dans lequel au moins des parties des ailes (40L, 40R) chevauchent des fourches avant (14) lorsqu'on les observe en vue latérale.

4. Véhicule à enfourcher (1) selon l'une quelconque des revendications 1 à 3, dans lequel chacune des ailes (40L, 40R) a une forme inclinée vers le haut qui est positionnée de plus en plus haut à mesure qu'elle progresse vers l'arrière lorsqu'on l'observe en vue latérale.

5. Véhicule à enfourcher (1) selon l'une quelconque des revendications 1 à 4, dans lequel les ailes (40L, 40R) sont formées d'un seul tenant avec les coiffes internes (31L, 31R).

6. Véhicule à enfourcher (1) selon l'une quelconque des revendications 1 à 5, dans lequel chacune des ailes (40L, 40R) comprend une pluralité d'aubes inclinées qui sont positionnées de plus en plus haut à mesure qu'elles se déplacent vers l'arrière quand on les observe en vue latérale.

7. Véhicule à enfourcher (1) selon l'une quelconque des revendications 1 à 6, dans lequel la coiffe externe (32L, 32R) comprend une section supérieure trapézoïdale (33) ayant une forme trapézoïdale s'étendent vers l'avant et l'arrière lorsqu'on l'observe en vue latérale et une section inférieure trapézoïdale (34) s'étendant vers le haut et le bas et ayant une largeur dans une direction avant et une direction arrière qui se rétrécit à mesure qu'elle s'étend vers le bas lorsqu'on l'observe en vue latérale et
la coiffe externe est installée dans une zone projetée d'une surface avant d'un corps de véhicule lorsqu'on l'observe en vue frontale.

8. Véhicule à enfourcher (1) selon l'une quelconque des revendications 1 à 7, dans lequel une extrémité inférieure de la coiffe externe (32L, 32R) est disposée à la même hauteur que celle d'une marche d'occupant (17) lorsqu'on l'observe en vue latérale.
